# FASCICULE DE BREVET EUROPEEN

(11) **EP 3 662 089 B1**
(45) Date de publication et mention de la délivrance du brevet: **18.08.2021**
(21) Numéro de dépôt: 18778547.2
(22) Date de dépôt: 06.09.2018
(51) Int. Cl.: C22B 3/26, C22B 3/00

(54) **PROCÉDÉ DE SÉPARATION DU PALLADIUM DES AUTRES ÉLÉMENTS MÉTALLIQUES PRÉSENTS DANS UNE PHASE AQUEUSE NITRIQUE UTILISANT COMME EXTRACTANTS DES MALONAMIDES PARTICULIERS**
VERFAHREN ZUR ABSCHEIDUNG VON PALLADIUM AUS ANDEREN IN WÄSSRIGER SALPETERSÄURE ENTHALTENEN METALLELEMENTEN UNTER VERWENDUNG SPEZIELLER MALONAMIDE ALS EXTRAKTIONSMITTEL
METHOD FOR SEPARATING PALLADIUM FROM OTHER METAL ELEMENTS PRESENT IN AN AQUEOUS NITRIC PHASE USING SPECIFIC MALONAMIDES AS EXTRACTANTS

(30) Priorité: 07.09.2017 FR 1758241
(43) Date de publication de la demande: 10.06.2020
(73) Titulaire: Commissariat à l'énergie atomique et aux énergies alternatives, 75015 Paris (FR); Centre National de la Recherche Scientifique, 75794 Paris Cedex 16 (FR)
(72) Inventeur: BOURGEOIS, Damien, 30390 Aramon (FR); MEYER, Daniel, 30150 Saint-Genies De Comolas (FR); BRAIBANT, Bertrand, 04860 Pierrevert (FR)
(74) Mandataire: Brevalex
(86) Numéro de dépôt international: PCT/FR2018/052183
(87) Numéro de publication internationale: WO 2019/048790

(56) Documents cités:
- EP-A1- 0 607 123
- WO-A1-2016/008932
- US-A- 5 503 812
- RÉMI POIROT ET AL: "Palladium Extraction by a Malonamide Derivative (DMDOHEMA) from Nitrate Media: Extraction Behavior and Third Phase Characterization", SOLVENT EXTRACTION AND ION EXCHA, TAYLOR & FRANCIS GROUP LLC, US, vol. 32, no. 5, 28 avril 2014 (2014-04-28) , pages 52-542, XP009181062, ISSN: 0736-6299, DOI: 10.1080/07366299.2014.908587 cité dans la demande

## Description

### DOMAINE TECHNIQUE

La présente invention appartient au domaine technique du recyclage du palladium et, plus particulièrement, à l'utilisation de malonamides particuliers comme extractants pour augmenter le facteur de séparation entre le palladium et les autres éléments métalliques contenus dans une solution aqueuse nitrique, issue notamment du recyclage des déchets d'équipements électriques et électroniques et ce, dans une opération d'extraction liquide-liquide.

Plus particulièrement, la présente invention propose un procédé permettant de séparer puis de récupérer sélectivement le palladium présent, dans une solution aqueuse nitrique, en mélange avec d'autres éléments métalliques et ce, en utilisant comme extractants des malonamides particuliers. La présente invention trouve des applications dans le traitement des déchets d'équipements électriques et électroniques et leur recyclage.

### ÉTAT DE LA TECHNIQUE ANTÉRIEURE

Le palladium (Pd) est un métal semi-précieux dont l'approvisionnement reste stratégique en raison d'une localisation géographique des gisements et, par conséquent, de la production, limitée à quelques pays (principalement Russie 41% et Afrique du Sud 36%). En outre, même si le palladium n'apparaît pas comme un métal stratégique dans les analyses de l'UE, des tensions peuvent exister sur le marché du palladium en raison de la fin des stocks détenus par la Russie qui permettaient de détendre le marché, ainsi que de l'accroissement régulier de la demande en palladium. Aussi, l'ensemble des métaux du groupe du platine, notamment le platine (Pt), le palladium et le rhodium (Rh) est lui considéré comme stratégique par l'UE et les USA, plutôt en raison du platine, mais la production de ces trois métaux est intimement liée.

Le palladium est un métal qui présente des propriétés catalytiques intéressantes, et une bonne résistance à la corrosion. Il sert principalement dans la confection de pots catalytiques pour l'automobile (67%). Les autres applications sont : l'électronique (12%), l'industrie chimique (5%), la réparation dentaire (5%) et la joaillerie (4%). Ce métal noble sert aussi de placement financier (10% de la demande en 2010, quantité négligeable en 2013). L'évolution de la demande en palladium est essentiellement assurée par la croissance du marché automobile.

On estime à un quart environ la quantité de palladium consommée annuellement provenant du recyclage. Ce recyclage concerne exclusivement les pots catalytiques, une source homogène de palladium, traitée en milieu chlorhydrique. L'exploitation de nouvelles filières de recyclage devrait donc être un domaine d'intérêt économique prochain. La valorisation des déchets d'équipements électriques et électroniques (ou DEEE) également désignés par l'expression « la mine urbaine » est une thématique en plein essor, et représente une source potentielle importante de palladium (deuxième marché d'application). Les études de recyclage de ces matériaux se dirigent selon deux axes : pyrochimie/pyrométallurgie et hydrométallurgie. En ce qui concerne l'hydrométallurgie, différentes technologies peuvent être employées comme, par exemple, l'extraction liquide-liquide, l'électrochimie, les membranes liquides supportées ou encore les résines échangeuses d'ions.

Dans le cas de l'hydrométallurgie, l'or présent dans les circuits imprimés impose une dissolution en milieu acide oxydant, et le seul acide chlorhydrique utilisé pour le recyclage des pots catalytiques ne convient plus. Plusieurs solutions sont envisagées, comme les mélanges chlorhydrique/nitrique ou sulfurique/eau oxygénée.

Dans l'état de la technique, l'utilisation d'une phase organique contenant un malonamide pour séparer, récupérer ou extraire du palladium d'une phase aqueuse dans laquelle il se trouve est connue. Les malonamides ont été testés avec succès à l'échelle pilote dans plusieurs procédés en milieu nitrique et il a été montré que le palladium est bien extrait par les malonamides. De plus, le comportement du palladium en extraction liquide-liquide par le *N,N*'-diméthyl-*N,N*'-dioctylhexyléthoxymalonamide (ou DMDOHEMA) a fait l'objet d'une publication **[1].** Enfin, il a déjà été établi que le palladium est co-extrait, lors d'un procédé de récupération sélective de l'américium développé par la Demanderesse, avec les lanthanides, ce qui nécessite l'ajout d'acide *N*-(2-hydroxyéthyl)éthylène diamine triacétique (ou HEDTA) dans la phase aqueuse **[2].**

Par ailleurs, la Demanderesse a mis au point un procédé utilisant une phase organique contenant un malonamide et, plus particulièrement, un malonamide qui ne contient pas d'atome de soufre pour séparer et purifier sélectivement le palladium contenu en mélange avec d'autres éléments métalliques dans une solution aqueuse nitrique **[3].**

Dans toutes les données disponibles avant que le procédé décrit dans **[3]** ne soit proposé, soit le palladium était co-extrait avec les lanthanides, soit il était séquestré en phase aqueuse et les lanthanides étaient extraits. Les malonamides et, plus particulièrement, les malonamides dépourvus d'atomes de soufre n'étaient pas connus pour être des extractants spécifiques du palladium : ils avaient été développés dans le cadre de l'extraction des lanthanides et des actinides, des cations définis comme des « cations durs » selon la théorie HSAB (pour « Hard and Soft Acid and Base », théorie développée par Pearson **[4]),** alors que le palladium est un cation classé comme « mou ».

Ainsi, rien ne suggérait à l'homme du métier d'utiliser un malonamide pour récupérer sélectivement le palladium à partir d'une solution aqueuse nitrique contenant d'autres cations métalliques. Il est donc assez surprenant de constater que le palladium peut être extrait, de manière sélective, par rapport à plusieurs cations métalliques, dont les lanthanides, simplement en ajustant la teneur en acide nitrique de la phase aqueuse et ce, à une concentration en acide nitrique inférieure ou égale à 3 mol.L⁻¹.

Dans le procédé décrit dans **[3],** l'extractant utilisé est un malonamide exempt d'atome de soufre et de formule (F) :

R¹(R²)N-C(=O)-CH(R³)-C(=O)-N(R⁴)R⁵ (F)

dans laquelle les groupements R¹, R², R³, R⁴ et R⁵, identiques ou différents, représentent un alkyle ou un hétéroalkyle, exempt d'atome de soufre.

Le malonamide plus particulièrement exemplifié dans **[3]** est le DMDOHEMA. Même si un tel malonamide et, de façon générale, les malonamides de formule (F) sont robustes en milieu nitrique, ils restent chers à préparer (3 étapes de synthèse à façon), ce qui rend donc un procédé compétitif dépendant d'un très bon recyclage du solvant. En outre, ces malonamides sont utilisés à hauteur de 0,6 M, soit environ 300 g/L pour le DMDOHEMA, ce qui rend l'investissement initial en solvant conséquent.

Les inventeurs se sont donc fixé pour but d'améliorer encore le procédé décrit dans **[3]** en mettant au point un extractant ne présentant pas les inconvénients des malonamides de formule (F) tout en permettant de séparer et de purifier efficacement et sélectivement le palladium contenu dans une solution aqueuse nitrique contenant du palladium et d'autres cations tels que des cations métalliques.

### EXPOSÉ DE L'INVENTION

Ce but et d'autres encore sont atteints par la présente invention selon la revendication 1 qui propose un procédé de séparation du palladium des autres éléments métalliques contenus dans une phase aqueuse nitrique via une extraction liquide-liquide utilisant une phase organique contenant, comme extractant, de nouveaux malonamides différents des malonamides de formule (F) utilisés dans **[3].**

Les malonamides mis en œuvre dans le cadre de la présente invention présentent les avantages suivants :
- ils sont faciles à préparer à partir de réactifs industriels. Par ailleurs, les inventeurs ont montré qu'il n'était pas nécessaire d'utiliser ces malonamides sous forme purifiée pour conserver une bonne sélectivité (cf. dans la partie expérimentale ci-après, les résultats obtenus avec le THEMA - lot B) ;
- ils sont robustes et ré-utilisables dans un procédé de séparation du palladium : en effet, comme les extractants mis en œuvre dans la présente invention appartiennent à la famille des malonamides, aucun problème de stabilité chimique n'est attendu ;
- ils sont utilisables en une quantité moindre comparés aux malonamides de formule (F) ;
- ils sont efficaces et sélectifs permettant d'atteindre des D_{Pd} supérieurs à 20 et des FS_{Pd/Fe} supérieurs à 1000 respectivement.

On rappelle que, dans le domaine des extractions liquide-liquide, c'est-à-dire utilisant la différence de solubilité des éléments chimiques que l'on cherche à séparer entre une phase aqueuse et une phase organique :
- le coefficient de distribution entre deux phases, organique et aqueuse, d'un élément métallique M, noté D_{M}, correspond au rapport entre la concentration (ou activité) que présente cet élément dans la phase organique et la concentration que présente ce même élément dans la phase aqueuse ;
- le facteur d'extraction d'un élément métallique M, noté E_{M}, correspond à O/A ∗ D_{M}, c'est-à-dire au produit du rapport entre le volume ou le débit (si les phases mises en présence sont circulantes) de la phase organique et le volume ou le débit de la phase aqueuse par le coefficient de distribution D_{M} de ce même élément ; et
- le facteur de séparation entre deux éléments métalliques M1 et M2, noté FS_{M1/M2} correspond à D_{M1}/D_{M2}, c'est-à-dire au rapport entre le coefficient de distribution de l'élément M1 et le coefficient de distribution de l'élément M2.

Il convient de noter que, comme les malonamides utilisés dans le cadre de la présente invention, présentent une sélectivité pour le palladium encore améliorée par rapport à celle obtenue avec les malonamides de formule (F) utilisés dans **[3],** la quantité d'acide nitrique dans la phase aqueuse n'est plus à ajuster. En d'autres termes, le procédé selon l'invention permet de séparer puis de récupérer sélectivement le palladium présent, dans une solution aqueuse nitrique, en mélange avec d'autres éléments métalliques et ce, quelle que soit la quantité d'acide nitrique dans cette solution.

Par ailleurs, les étapes d'extraction et de désextraction mises en œuvre dans le cadre des procédés de séparation et de récupération selon l'invention peuvent être mises en œuvre aussi bien à courants croisés qu'à contre-courant, sauf mention explicite contraire. De plus, dans la présente invention, par « rapport O/A », on entend le rapport entre le volume ou le débit (si les phases mises en présence sont circulantes) de la phase organique et le volume ou le débit de la phase aqueuse.

Plus particulièrement, le procédé de séparation du palladium des autres éléments métalliques contenus dans une phase aqueuse nitrique consiste :
- à mettre en contact une phase aqueuse nitrique contenant, en plus du palladium, au moins un autre cation métallique dont la valence est supérieure ou égale à 2 avec une phase organique non miscible à l'eau puis
- à séparer la phase aqueuse nitrique et la phase organique dans laquelle du palladium a été extrait,
ladite phase organique contenant au moins un malonamide exempt d'atome de soufre en tant qu'extractant de formule (I) :

R¹(R²)N-C(=O)-CH₂-C(=O)-N(R³)R⁴ (I)

dans laquelle les groupements R¹, R², R³ et R⁴, identiques ou différents, représentent un alkyle, un hétéroalkyle ou un arylalkyle, lesdits alkyle, hétéroalkyle et arylalkyle étant exempt d'atome de soufre et présentant chacun au moins 5 atomes de carbone.

L'utilisation des malonamides de formule (I) dans les extractions liquide-liquide n'est pas nouvelle en soi. De tels malonamides ont été testés avec succès à l'échelle pilote dans plusieurs procédés d'extraction en milieu nitrique.

Toutefois, Bao et Sun ont comparé l'extraction de l'uranium(VI) à partir de solutions nitriques en utilisant, comme extractant dans une phase organique à base de toluène, soit du N,N,N',N'-tetrabutylmalonamide (TBMA), soit du N,N,N',N'-tetrahexylmalonamide (THEMA) qui répond à la formule (I) **[5].** Les résultats présentés dans cet article montrent que l'efficacité d'extraction du TBMA est meilleure que celle du THEMA, cette différence étant expliquée par l'encombrement stérique plus grand au niveau des atomes d'azote pour THEMA comparé à TBMA.

De même, Mowafy et Aly ont étudié l'extraction de lanthanides(III) en utilisant 8 malonamides différents parmi lesquels on trouve le THEMA **[6].** Dans la conclusion de **[6],** il est précisé que la capacité pour extraire des lanthanides(III) est influencée par les substituants et la longueur de la chaîne carbonée des malonamides et que les malonamides dont le carbone méthylénique central est monosubstitué ont une capacité d'extraction plus élevée que celle des malonamides non substitués.

Ces différents enseignements auraient dissuadé l'homme du métier de remplacer les malonamides de formule (F) tels que mis en œuvre dans **[3]** par des malonamides de formule (I) tels que mis en œuvre dans la présente invention. *A fortiori,* il était difficile d'envisager que ce remplacement pourrait entraîner une amélioration de l'efficacité et de la sélectivité de l'extraction du palladium présent, dans une solution aqueuse nitrique, en mélange avec d'autres éléments métalliques.

Dans le procédé selon la présente invention, si la phase aqueuse nitrique contient un ou plusieurs lanthanides, ces derniers restent dans la solution aqueuse nitrique, suite à la mise en contact avec la phase organique contenant au moins un malonamide de formule (I) comme extractant. De plus, le procédé selon la présente invention ne nécessite pas d'ajouter un quelconque complexant sélectif des autres cations multivalents présents dans la phase aqueuse nitrique, tel que, par exemple, l'EDTA.

Dans le cadre de la présente invention, la phase aqueuse nitrique utilisée se caractérise par la présence de différents éléments métalliques parmi lesquels on trouve du palladium et au moins un autre cation métallique dont la valence est supérieure ou égale à 2.

Toute phase aqueuse nitrique contenant différents éléments métalliques parmi lesquels on trouve du palladium et au moins un autre cation métallique dont la valence est supérieure ou égale à 2 est utilisable dans le cadre de la présente invention. La phase aqueuse nitrique utilisée dans le cadre du procédé selon l'invention est avantageusement une solution aqueuse nitrique issue du traitement des déchets d'équipements électriques et électroniques. Ainsi, cette phase aqueuse nitrique comprend non seulement du palladium mais aussi au moins un élément métallique choisi dans le groupe constitué par le fer (Fe), le cuivre (Cu), le zinc (Zn), l'aluminium (Al), le plomb (Pb), le nickel (Ni), l'argent (Ag), le cobalt (Co), le néodyme (Nd), le lanthane (La), le dysprosium (Dy), l'ytterbium (Yb) et le chrome (Cr). La quantité de chacun de ces éléments métalliques et notamment la quantité de palladium dans la phase aqueuse nitrique dépendra de l'origine de la phase aqueuse nitrique et notamment de la nature des déchets d'équipements électriques et électroniques et du traitement qu'ils ont subi.

Typiquement, les déchets d'équipements électriques et électroniques sont broyés, éventuellement soumis à une attaque acide, par exemple, par de l'acide chlorhydrique ou de l'acide sulfurique puis soumis à une attaque oxydante par de l'acide nitrique notamment à une quantité comprise entre 3 mol.L⁻¹ et 6 mol.L⁻¹ et ce, afin de dissoudre des éléments métalliques tels que l'or, l'argent, le palladium et certains lanthanides. La phase aqueuse nitrique mise en œuvre dans le procédé selon la présente invention correspond donc à la solution obtenue suite à un tel traitement i.e. une eau de lixiviation des broyats de déchets d'équipements électriques et électroniques.

Comme déjà évoqué, il n'est pas nécessaire d'ajuster la quantité d'acide nitrique dans la phase aqueuse nitrique mise en œuvre dans le procédé selon l'invention, lorsque cette phase aqueuse nitrique est issue de l'attaque oxydante de déchets d'équipements électriques et électroniques par de l'acide nitrique. La quantité d'acide nitrique dans la phase aqueuse nitrique mise en œuvre dans le procédé selon l'invention est avantageusement comprise entre 0,1 mol.L⁻¹ et 6 mol.L⁻¹ et notamment entre 0,5 mol.L⁻¹ et 5,5 mol.L⁻¹. A titre d'exemples illustratifs, la quantité d'acide nitrique dans la phase aqueuse nitrique peut être de l'ordre de 1 mol.L⁻¹ (i.e. 1 mol.L⁻¹ ± 0,50 mol.L⁻¹), de l'ordre de 2 mol.L⁻¹ (i.e. 2 mol.L⁻¹ ± 0,50 mol.L⁻¹), de l'ordre de 3 mol.L⁻¹ (i.e. 3 mol.L⁻¹ ± 0,50 mol.L⁻¹), de l'ordre de 4 mol.L⁻¹ (i.e. 4 mol.L⁻¹ ± 0,50 mol.L⁻¹) ou encore de l'ordre de 5 mol.L⁻¹ (i.e. 5 mol.L⁻¹ ± 0,50 mol.L⁻¹). Les quantités d'acide nitrique précédemment données s'entendent préalablement à la mise en contact avec la phase organique. En effet, une certaine quantité d'acide nitrique peut être extraite dans la phase organique par l'extractant malonamide.

Cette phase aqueuse peut éventuellement avoir subi un prétraitement pour en retirer déjà certains cations métalliques. En effet, selon le procédé choisi, certains éléments majoritaires comme le cuivre ou le fer, ou encore l'or pour son importante valeur, peuvent être sélectivement extraits par des techniques classiques d'hydrométallurgie. A titre d'exemple, Jung *et al.* ont proposé un procédé de récupération sélective préalable de l'or utilisant du dibutyl carbitol comme extractant **[7],** qui conduit à une solution acide résiduelle comprenant du palladium mélangé à d'autres cations comme le zinc, le cuivre, l'argent ou le platine.

De façon générale et notamment eu égard à ce qui précède, le palladium présent dans la phase aqueuse nitrique préalablement à la mise en œuvre du procédé de préparation se présente sous forme oxydée i.e. sous forme de cations Pd²⁺. Ce dernier peut être éventuellement présent en partie sous forme de complexe par les anions nitrate ou chlorure présents dans la solution.

La phase aqueuse nitrique mise en œuvre dans le procédé selon la présente invention peut ne contenir, comme acide, que de l'acide nitrique. En variante, cette phase aqueuse nitrique peut contenir, en plus de l'acide nitrique, au moins un autre acide notamment choisi dans le groupe constitué par l'acide chlorhydrique, l'acide bromhydrique, l'acide fluorhydrique et l'acide sulfurique. De plus, que cette phase aqueuse nitrique contienne ou non au moins un autre acide différent de l'acide nitrique, elle peut en outre contenir de l'eau oxygénée (ou H₂O₂).

Dans le cadre du procédé de séparation selon la présente invention, l'extractant contenu dans la phase organique non miscible à l'eau se présente sous la forme d'un malonamide exempt d'atome de soufre de formule (I) ou de plusieurs malonamides exempts d'atome de soufre différents dont au moins un et avantageusement tous répondent à la formule (I). Ce ou ces dernier(s) est/sont capable(s) de former des complexes avec le palladium présent dans la phase aqueuse nitrique et, plus particulièrement, avec le nitrate de palladium présent dans cette phase.

Dans le cadre de la présente invention, sont explicitement exclus, des extractants utilisés seuls, les diamides soufrés tels que les dithiodiglycolamides. A noter qu'un tel diamide soufré ou un mélange de diamides soufrés différents peuvent cependant être utilisés, dans le cadre de la présente invention, en mélange avec au moins un malonamide exempt d'atome de soufre de formule (I).

Dans la formule (I) des malonamides mis en œuvre dans le cadre de la présente invention, on entend, par « groupe alkyle », un groupe alkyle, linéaire, ramifié ou cyclique, comprenant de 5 à 20 atomes de carbone, notamment de 5 à 15 atomes de carbone, en particulier, de 5 à 12 atomes de carbone et, plus particulièrement, de 5 à 10 atomes de carbone.

Dans le cadre de la présente invention, on entend, par « groupe hétéroalkyle », un groupe hétéroalkyle, linéaire, ramifié ou cyclique, comprenant de 5 à 20 atomes de carbone, notamment de 5 à 15 atomes de carbone, en particulier, de 5 à 12 atomes de carbone et, plus particulièrement, de 5 à 10 atomes de carbone, le ou les hétéroatomes pouvant être un atome d'azote, un atome d'oxygène ou un atome de phosphore, notamment un atome d'azote ou un atome d'oxygène et, en particulier, un atome d'oxygène. Il est évident que, dans le cadre de la présente invention, aucun hétéroatome présent dans un groupe hétéroalkyle n'est un atome de soufre. Le ou les hétéroatome(s) peu(ven)t en particulier interrompre une chaîne alkyle et/ou séparer une chaîne alkylène et une chaîne alkyle. En particulier, dans le cadre de la présente invention, un hétéroalkyle est un alkyle tel que précédemment défini interrompu par un atome d'oxygène.

Dans le cadre de la présente invention, on entend par « groupe arylalkyle », un groupe alkyle, linéaire, ramifié ou cyclique, comprenant de 1 à 20 atomes de carbone, notamment de 1 à 15 atomes de carbone, en particulier, de 1 à 12 atomes de carbone et, plus particulièrement, de 1 à 10 atomes de carbone, ledit groupe alkyle étant substitué par un groupe aryle. Par « groupe aryle », on entend un groupe aromatique mono- ou polycyclique ayant de 4 à 10 atomes de carbone et, notamment, de 6 à 8 atomes de carbone. Dans le cadre de la présente invention, lorsque au moins un groupement parmi les groupements R¹, R², R³ et R⁴ est un groupe arylalkyle, ce groupe est fixé à l'azote du malonamide via son groupement alkyle.

Conformément à l'invention, le malonamide exempt d'atome de soufre de formule (I) mis en œuvre est, de préférence, choisi parmi les malonamides dans lesquels les groupements R¹, R², R³ et R⁴, identiques ou différents présentent chacun au moins 5 atomes de carbone et avantageusement au moins 6 atomes de carbone. Typiquement, le nombre total d'atomes de carbone que présentent ensemble les groupements R¹, R², R³ et R⁴ est supérieur ou égal à 20, notamment supérieur ou égal à 22 et, en particulier supérieur ou égal à 24. En effet, de tels malonamides présentent un caractère hydrophobe suffisant pour être utilisé en phase organique non miscible à l'eau.

Avantageusement, le malonamide exempt d'atome de soufre mis en œuvre dans le cadre de la présente invention est un malonamide de formule (I) telle que précédemment définie dans laquelle les groupements R¹ et R⁴ sont identiques et les groupements R² et R³ sont identiques, les groupements R¹ et R³ pouvant être identiques ou différents.

En particulier, le malonamide exempt d'atome de soufre de formule (I) mis en œuvre dans le cadre de la présente invention est choisi dans le groupe constitué par le *N,N,N',N'*-tetrahexylmalonamide (ou THEMA), le *N,N,N',N*'-tetraoctylmalonamide (ou TOMA), le *N,N,N',N*'-tetra(2-éthylhexyl)malonamide (ou T2EMA), le N,N'-dihexyl-N,N'-dibenzylmalonamide, le N,N,N',N'-tetra(2-phényléthyl)malonamide et le N,N'-dihexyl-N,N'-dicyclohexylmalonamide.

Plus particulièrement encore, le malonamide exempt d'atome de soufre de formule (I) mis en œuvre dans le cadre de la présente invention est le THEMA ou le TOMA.

Dans le cadre du procédé de séparation de l'invention, le malonamide exempt d'atome de soufre de formule (I) est présent dans la phase organique en une quantité supérieure ou égale à 10 mM, notamment en une quantité supérieure ou égale à 40 mM, en particulier, en une quantité supérieure ou égale à 60 mM, plus particulièrement en une quantité comprise entre 80 mM et 2 M et, plus particulièrement encore, en une quantité comprise entre 100 mM et 1 M. Lorsque la phase organique comprend plusieurs malonamides différents et notamment plusieurs malonamides exempts d'atome de soufre de formule (I) différents, la quantité totale de malonamides dans la phase organique est supérieure ou égale à 10 mM, notamment en une quantité supérieure ou égale à 25 mM, en particulier, en une quantité comprise entre 50 mM et 1,5 M et, plus particulièrement, en une quantité comprise entre 100 mM et 0,5 M.

Enfin, la phase organique non miscible à l'eau utilisée dans le cadre de la présente invention contient au moins un malonamide exempt d'atome de soufre de formule (I) tel que précédemment défini, comme extractant, dans un diluant organique. Avantageusement, ce diluant organique est choisi parmi les diluants organiques polaires ou aliphatiques dont l'utilisation a déjà été proposée pour la réalisation d'extractions liquide-liquide. Plus particulièrement, ce diluant organique est choisi dans le groupe constitué par le cyclopentane, le pentane, le cyclohexane, le n-hexane, le cycloheptane, le n-heptane, le n-octane, l'iso-octane, les nonanes ou les dodécanes, linéaires ou ramifiés (tels que le n-dodécane), l'hexadécane, l'éther de pétrole, le benzène, le n-butylbenzène, l'isobutylbenzène, le sec-butylbenzène, le tert-butylbenzène, le p-cymène, le triisopropylbenzène, le toluène, le xylène, les cumènes, le kérosène, le tétrapropylène hydrogéné (ou TPH), le diéthyl éther, le n-butyl acétate, l'isopropyl myristate et leurs mélanges. Finalement, le diluant organique peut comprendre en tout ou partie un sel fondu i.e. un sel possédant une température de fusion inférieure à 100°C, souvent même inférieure à la température ambiante. Par « température ambiante », on entend une température de 20°C ± 5°C. Ces sels fondus peuvent être employés comme substituts aux diluants organiques tels que définis ci-dessus dans les opérations d'extraction liquide-liquide et sont généralement constitués d'un cation organique et d'un anion qui peut être organique ou inorganique. A titre d'exemples illustratifs et non limitatifs de sels fondus utilisables comme solvant de la phase organique mise en œuvre lors du procédé de séparation selon l'invention, on peut citer les composés constitués d'un cation de la famille des N,N-dialkylpiperidiniums, N-alkylpyridiniums ou N,N'-dialkylimidazoliniums, et d'un anion hexafluorophosphate ou bis(trifluorométhanesulfonyl)imide.

Dans le procédé de séparation selon l'invention, l'homme du métier saura déterminer, sans effort inventif, le rapport O/A le mieux adapté en fonction de la phase aqueuse nitrique mise en œuvre. Typiquement, le rapport volumique entre la phase organique et la phase aqueuse nitrique est compris entre 1/10 et 10, notamment entre 1/5 et 2, en particulier entre 1/3 et 1 et, plus particulièrement, de l'ordre de 0,5 (i.e. 0,5 ± 0,2). De plus, durant ce procédé, la mise en contact entre la phase aqueuse nitrique et la phase organique dure entre 5 min et 2 h, notamment entre 10 min et 90 min et, en particulier, de l'ordre de 30 min (i.e. 30 min ± 10 min).

Le procédé de séparation selon la présente invention est réalisé à une température généralement inférieure à 80°C, en particulier comprise entre 10°C et 70°C. Dans une forme de mise en œuvre particulière, la température lors de ce procédé de séparation est la température ambiante. Par « température ambiante », on entend une température de 20°C ± 5°C.

La présente invention concerne un procédé de récupération sélective du palladium à partir d'une phase aqueuse nitrique qui contient, en plus du palladium, au moins un autre cation métallique dont la valence est supérieure ou égale à 2, ledit procédé comprenant la mise en œuvre d'un procédé de séparation tel que précédemment défini.

Plus particulièrement, le procédé de récupération selon l'invention comprend les étapes suivantes :
a) l'extraction du palladium d'une phase aqueuse nitrique qui contient, en plus du palladium, au moins un autre cation métallique dont la valence est supérieure ou égale à 2, laquelle extraction comprend au moins une opération dans laquelle ladite phase aqueuse nitrique est mise en contact avec une phase organique non miscible à elle, contenant, en tant qu'extractant, au moins un malonamide exempt d'atome de soufre de formule (I) telle que précédemment définie, puis séparée de cette phase organique ;
b) éventuellement la désextraction d'au moins un autre cation métallique dont la valence est supérieure ou égale à 2 présent dans la phase organique issue de l'étape (a), laquelle désextraction comprend au moins une opération dans laquelle la phase organique issue de l'étape (b) est mise en contact avec une phase aqueuse, le rapport O/A lors de cette mise en contact étant supérieur ou égal à 4 et
c) la désextraction sélective du palladium présent dans la phase organique issue de l'étape (a) ou éventuellement issue de l'étape (b), laquelle désextraction comprend au moins une opération dans laquelle la phase organique issue de l'étape (a) ou éventuellement issue de l'étape (b) est mise en contact avec une phase aqueuse, puis séparée de cette phase aqueuse.

Tout ce qui a été précédemment décrit pour le procédé de séparation s'applique *mutatis mutandis* à l'étape (a) du procédé de récupération selon l'invention. Ainsi, lors de cette étape, la phase aqueuse nitrique contenant du palladium et au moins un autre cation métallique dont la valence est supérieure ou égale à 2 est telle que précédemment définie, notamment en termes de concentration en acide nitrique.

Dans le cadre du procédé de récupération selon la présente invention, l'étape (b) est une étape optionnelle de lavage de la phase organique obtenue suite à l'étape (a). Elle permet d'améliorer encore la sélectivité de la récupération du palladium en extrayant, de la phase organique obtenue suite à l'étape (a), d'autres cations métalliques dont la valence est supérieure ou égale à 2 qui auraient pu être entraînés dans cette phase.

Dans certains cas, la phase organique obtenue suite à l'étape (a) contient au moins un malonamide exempt de soufre tel que précédemment défini, du palladium et au moins un autre cation métallique dont la valence est supérieure ou égale à 2. Cet autre cation est notamment choisi dans le groupe constitué par un cation ferreux, un cation ferrique, un cation cuivrique, un cation nickel, un cation aluminium, un cation plombeux, ou un cation zinc. Lors de cette étape de lavage, les cations métalliques différents du palladium sont désextraits, de façon sélective, de la phase organique.

Avantageusement, la phase aqueuse mise en œuvre lors de l'étape (b) du procédé de récupération selon l'invention est soit de l'eau, soit une solution aqueuse d'acide nitrique. La solution aqueuse nitrique mise en œuvre lors de l'étape (b) est une solution aqueuse comprenant de l'acide nitrique en une quantité comprise entre 0,5 et 2 M et notamment entre 1 et 1,5 M.

Lors de l'étape (b) du procédé de récupération selon l'invention, l'opération de mise en contact de la phase organique avec une phase aqueuse telle que définie ci-dessus n'est pas répétée. En variante, lors de l'étape (b) du procédé de récupération selon l'invention, l'opération de mise en contact de la phase organique avec une phase aqueuse telle que définie ci-dessus peut être répétée au moins une fois. A chaque nouvelle mise en contact, la phase aqueuse utilisée peut être identique ou différente à la phase aqueuse utilisée lors de la mise en contact précédente. Ainsi, lorsque la mise en contact est répétée deux fois, il est possible d'utiliser
(i) de l'eau comme phase aqueuse lors des deux mises en contact,
(ii) une solution aqueuse d'acide nitrique comme phase aqueuse lors des deux mises en contact,
(iii) de l'eau comme phase aqueuse lors de la 1^{ère} mise en contact puis une solution aqueuse d'acide nitrique comme phase aqueuse lors de la 2^{nde} mise en contact, ou encore
(iv) une solution aqueuse d'acide nitrique comme phase aqueuse lors de la 1^{ère} mise en contact puis de l'eau comme phase aqueuse lors de la 2^{nde} mise en contact.

Avantageusement, lorsque l'étape (b) du procédé selon l'invention comprend deux opérations de mise en contact, de l'eau est utilisée comme phase aqueuse lors de la 1^{ère} mise en contact puis une solution aqueuse d'acide nitrique est utilisée comme phase aqueuse lors de la 2^{nde} mise en contact.

Dans un 1^{er} mode de réalisation de l'étape (b) du procédé selon l'invention et notamment lorsque cette étape est réalisée à contre-courant, le rapport O/A est inférieur à 7 et notamment inférieur à 6 et, en particulier, inférieur à 5. Typiquement, lorsque l'étape (b) du procédé selon l'invention est réalisée à contre-courant, le rapport O/A vaut 4.

Dans un 2^{nd} mode de réalisation de l'étape (b) du procédé selon l'invention et notamment lorsque cette étape est réalisée à courants croisés, le rapport O/A est supérieur ou égal à 7, notamment supérieur à 7 et inférieur ou égal à 10 et, en particulier, supérieur ou égal à 8 et inférieur ou égal à 10.

De plus, durant cette étape (b), la ou les mise(s) en contact entre la phase aqueuse et la phase organique dure(nt) entre 15 min et 2 h, notamment entre 30 min et 90 min et, en particulier, de l'ordre de 60 min (i.e. 60 min ± 10 min).

L'étape (b) du procédé selon la présente invention est réalisée à une température généralement inférieure à 50°C, en particulier inférieure à 40°C et, plus particulièrement, inférieure à 30°C. Avantageusement, la température lors de cette étape (b) est la température ambiante.

L'étape (c) de désextraction est une étape classique des extractions liquide-liquide.

Dans un 1^{er} mode de réalisation de cette étape de désextraction, la phase aqueuse mise en œuvre lors de l'étape (c) est une solution diluée d'acide de pH supérieur à 1. De nombreux acides peuvent convenir pour préparer une telle solution diluée d'acide, et à titre d'exemples non limitatifs on peut utiliser l'acide chlorhydrique, l'acide nitrique, ou l'acide sulfurique. En variante, la phase aqueuse mise en présence de la phase organique contenant le palladium présente initialement un pH neutre (i.e. pH compris entre 6,5 et 7,5) qui s'acidifie suite à cette mise en contact et au passage, dans la phase aqueuse, des acides et notamment de l'acide nitrique présent dans la phase organique suite à l'étape (a) et éventuellement suite à l'étape (b).

Dans un 2^{nd} mode de réalisation de cette étape de désextraction, la phase aqueuse utilisée contient un agent complexant du palladium propre à faciliter la migration en phase aqueuse du palladium contenu dans la phase organique suite à l'étape (a) et éventuellement suite à l'étape (b).

Avantageusement, cet agent complexant est choisi parmi les agents dont l'utilisation a déjà été proposée pour la réalisation d'extractions liquide-liquide. Un tel agent est typiquement capable de complexer le palladium contenu dans la phase organique obtenue suite à l'étape (a) ou éventuellement suite à l'étape (b) du procédé. En particulier, cet agent complexant est choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin tels que du chlorure de lithium ; les composés azotés comme l'ammoniaque, les sels d'hydrazine, les sels d'hydroxylamine et leurs mélanges ; le chlorure d'ammonium ; les composés chélatants dérivés de polyacides carboxyliques comme l'acide oxalique, l'EDTA, l'HEDTA et leurs mélanges.

A titre d'exemples particuliers et non exhaustifs, la phase aqueuse utilisée lors de ce 2^{nd} mode de réalisation de cette étape de désextraction peut contenir de l'acide chlorhydrique à une concentration comprise entre 1 mol.L⁻¹ et 8 mol.L⁻¹ de phase aqueuse, et/ou de la thiourée en une quantité comprise entre 0,1 mol.L⁻¹ et 2 mol.L⁻¹ de phase aqueuse et/ou du thiosulfate en une quantité comprise entre 0,1 mol.L⁻¹ et 2 mol.L⁻¹ de phase aqueuse. Aussi, on peut employer une phase aqueuse à base d'ammoniaque, à une teneur comprise entre 1 et 4% (exemple ammoniaque 1 M).

Dans un 3^{ème} mode de réalisation de cette étape de désextraction et selon la nature (composition chimique) du flux aqueux utilisé dans l'étape (a) ou éventuellement après l'étape (b), la phase organique obtenue après cette étape (a) ou éventuellement (b) peut être d'une pureté suffisante pour effectuer une récupération directe du palladium métal lors de l'étape (c). Dans ce cas, on utilise une phase aqueuse comprenant un réducteur du palladium qui permet la précipitation de palladium métal sous forme de colloïdes à l'interphase des deux phases. Ces particules peuvent alors être séparées par toute technique de séparation liquide-solide adaptée, connue de l'homme du métier, comme, par exemple, une filtration, ou une centrifugation. De nombreux agents réducteurs peuvent être utilisés dans ce 3^{ème} mode de réalisation. A titre d'exemples illustratifs et non limitatifs, on peut employer une solution d'hydrazine dans l'acide nitrique telle qu'une solution aqueuse d'acide nitrique diluée (0,1 M à 1 M) contenant de l'hydrazine 0,1 mol.L⁻¹ ou une solution de formate de sodium ou de potassium.

Dans l'étape (c) du procédé selon l'invention, le rapport volumique entre la phase organique et la phase aqueuse contenant le palladium est compris entre 1/10 et 10, notamment entre 1/8 et 8 et, en particulier entre 1/6 et 6 et, tout particulièrement, entre 1/2 et 2. De plus, la mise en contact de la phase aqueuse et la phase organique contenant le palladium dure entre 5 min et 90 min, notamment entre 10 min et 60 min et, en particulier, de l'ordre de 30 min (i.e. 30 min ± 10 min).

L'étape (c) du procédé selon l'invention est réalisée à une température généralement inférieure à 50°C, en particulier inférieure à 40°C et, plus particulièrement, inférieure à 30°C. Avantageusement, la température lors de ce procédé de séparation est la température ambiante.

Suite à l'étape (c) du procédé selon l'invention et notamment suite aux 1^{er} et au 2^{nd} mode de réalisation, il est facile de récupérer le palladium présent dans la phase aqueuse. Il est, par exemple, possible de récupérer du palladium sous forme métallique en soumettant les cations Pd²⁺ présents dans la phase aqueuse obtenue suite à l'étape (c) à une réduction. Cette réduction peut être effectuée suivant les nombreuses techniques disponibles et connues. A titre d'exemples illustratifs et non limitatifs, on peut effectuer cette réduction par voie électrochimique, ou encore par ajout de réactifs chimiques ayant un caractère réducteur, comme les sels de bore (borates, borohydrures...), l'acide formique ou ses sels, l'hydrazine. Le palladium réduit est apte à précipiter dans la phase aqueuse et ce précipité peut être récupéré par toute technique de séparation liquide-solide adaptée, connue de l'homme du métier, comme, par exemple, une filtration, ou une centrifugation.

Il est aussi possible de récupérer le palladium(II) sous forme de précipité selon l'agent complexant obtenu (2^{nd} mode de réalisation de l'étape (c)). A titre d'exemples illustratifs et non limitatifs, on peut récupérer le palladium sous forme de précipité d'hydroxyde de palladium(II), de chlorure d'ammonium et de palladium(II), de sulfite de palladium(II), de disulfite de palladium(II) et de sodium ou de potassium. Dans ce dernier cas, on effectuera avantageusement une précipitation à l'aide de chlorure d'ammonium.

De plus, suite à l'étape (c) du procédé selon l'invention, la phase organique contenant au moins un malonamide exempt d'atome de soufre de formule (I) peut être récupérée et réutilisée et ce, notamment dans un procédé de récupération sélective du palladium tel que défini dans la présente invention.

D'autres caractéristiques et avantages de la présente invention apparaîtront encore à l'homme du métier à la lecture des exemples ci-dessous donnés à titre illustratif et non limitatif.

### EXPOSÉ DÉTAILLÉ DE MODES DE RÉALISATION PARTICULIERS

### I. Synthèse et purification des malonamides utilisés

### I.1. N,N,N',N'-tetrahexylmalonamide (THEMA - lot A)

Un mélange de diéthyl malonate (2,0 g) et de *N,N-*dihexylamine (4,9 g) dans un autoclave est chauffé à 150°C pendant 16 h. L'éthanol formé est éliminé du produit de la réaction par évaporation, puis le composé obtenu est purifié par chromatographie sur gel de silice (gradient d'éluant : cyclohexane pur à cyclohexane/acétate d'éthyle - 60/40). On obtient le THEMA sous forme d'une huile incolore (4,4 g).

Analyses : RMN ¹H : δ(ppm) 3.37 (s, 2H), 3.21-3.29 (m, 8H), 1.48-1.53 (m, 8H), 1.17-1.25 (m, 24H), 0.79 (t, J = 7.2 Hz, 12H). RMN ¹³C : δ(ppm) 166.6, 48.4, 46.0, 40.8, 31.5, 31.5, 28.9, 27.5, 26.6, 26.6, 22.5, 13.9, 13.9.

### I.2. N,N,N',N'-tetrahexylmalonamide (THEMA - lot B)

Un mélange de diéthyl malonate (2,0 g) et de *N,N*-dihexylamine (4,9 g) dans ballon muni d'un condenseur à air est chauffé à 180°C pendant 4 h. L'éthanol formé est éliminé du produit de la réaction par évaporation, puis le brut de la réaction est repris dans 4 mL d'un mélange acétate d'éthyle/cyclohexane 50/50. On y ajoute 1,2 g de charbon actif, puis la suspension obtenue est agitée pendant 30 min. Le mélange résiduel est filtré sur célite (rinçage par un mélange acétate d'éthyle/cyclohexane 50/50), puis concentré sous vide. On obtient le THEMA sous forme d'une huile jaune pâle (5,2 g).

L'analyse par RMN ¹H est similaire à celle du produit pur (point I.1 ci-dessus).

### I.3. N,N,N',N'-tetraoctylmalonamide (TOMA)

Un mélange de diéthyl malonate (1,0 g) et de *N,N*-dioctylamine (3,3 g) dans un autoclave est chauffé à 160°C pendant 16 h. L'éthanol formé est éliminé du produit de la réaction par évaporation, puis le composé obtenu est purifié par chromatographie sur gel de silice (éluant : cyclohexane/acétate d'éthyle - 80/20). On obtient le TOMA sous forme d'une huile incolore (3,1 g).

Analyses : RMN ¹H : δ(ppm) 3.47 (s, 2H), 3.29-3.36 (m, 8H), 1.51-1.58 (m, 8H), 1.22-1.29 (m, 40H), 0.82 (t, J = 7.3 Hz, 12H).

### II. Extraction de métaux

### 11.1. Protocole

Une solution aqueuse mère en milieu nitrique 5 M contenant 2000 mg/L de Pd, 2000 mg/L de Nd et 20 g/L de Fe est préparée à partir des sels Pd(NO₃)₂,xH₂O, Nd(NO₃)₃,6H₂O et Fe(NO₃)₃,9H₂O, achetés auprès des sociétés STREM ou ALDRICH.

Différentes solutions organiques sont préparées. Chacune d'elles contient une certaine quantité de THEMA ou de TOMA dans du toluène, à diverses concentrations.

Les phases organiques sont pré-équilibrées avec les phases aqueuses correspondantes sans métal. Pour cela, chaque phase organique est mise en contact 1 h avec une phase aqueuse d'acidité souhaitée pour l'extraction. Le volume aqueux est au moins cinq fois supérieur au volume organique.

Les extractions sont réalisées en mettant en contact les phases organiques pré-équilibrées avec les phases aqueuses contenant 200 mg/L de Pd et de Nd, et 2000 mg/L de Fe (dilution 10 de la phase aqueuse mère) et en ajustant la concentration en acide nitrique à chaque condition opératoire. Les volumes des 2 phases sont égaux. L'extraction dure 1 h.

Les phases sont ensuite séparées. Les phases organiques sont contre-extraites à l'aide d'une solution aqueuse de thiourée à 0,2 M. Le volume de phase aqueuse est quatre fois celui de la phase organique. Chaque contre-extraction dure 30 minutes.

Les concentrations en métaux des différentes phases aqueuses (d'extraction ou de contre-extraction) sont dosées par une analyse par spectrométrie d'émission atomique à source plasma (ou ICP-AES pour « Inductively coupled plasma atomic emission spectroscopy »).

### 11.2 Résultats

Les résultats avec le THEMA - lot A et le TOMA purifiés sont donnés dans le Tableau 1 suivant :

**Tableau 1**

| [THEMA] (mol/L) | [HNO₃] (mol/L) | DPd | DFe | DNd |
|---|---|---|---|---|
| 0,5 | 2,0 | > 34 | 0,004 | 0,017 |
| | 2,5 | > 34 | 0,014 | 0,026 |
| | 3,0 | > 34 | 0,050 | 0,038 |
| 0,6 | 2,0 | > 34 | 0,007 | 0,028 |
| | 2,5 | > 34 | 0,028 | 0,051 |
| | 3,0 | > 34 | 0,091 | 0,069 |
| | | | | |

| [TOMA] (mol/L) | [HNO₃] (mol/L) | DPd | DFe | DNd |
|---|---|---|---|---|
| 0,6 | 3,0 | > 34 | 0,053 | 0,037 |

La valeur de 34 correspond à la valeur maximale de D que l'on peut déterminer par ce protocole car dans tous les cas la quantité de Pd en phase aqueuse après extraction est inférieure à la limite de quantification (2,8 mg/L).

Les résultats avec le THEMA - lot B sont donnés dans le Tableau 2 suivant :

**Tableau 2**

| [THEMA] (mol/L) | [HNO₃] (mol/L) | DPd | DFe |
|---|---|---|---|
| 0,3 | 1,6 | > 70 | < LQ |
| | 2,0 | > 70 | 0,0003 |
| 0,2 | 2,0 | 34 | < LQ |
| | 3,0 | 38 | 0,015 |
| 0,1 | 3,0 | 9 | 0,0025 |
| | 5,0 | 7 | 0,023 |

La valeur de 70 correspond à la valeur maximale de D que l'on peut déterminer en tenant compte de la limite de quantification (LQ) du Pd.

Même en n'utilisant pas un THEMA purifié, on obtient une efficacité et une sélectivité pour l'extraction du palladium remarquables.

### II.3. Comparaison des performances THEMA - DMDBTDMA

Les résultats avec le THEMA - lot B et le N,N'-diméthyl-N,N'-dibutyltétradécylmalonamide (DMDBTDMA) acheté auprès de la société Pharmasynthèse sont donnés dans le Tableau 3 suivant :

**Tableau 3**

| Concentration en extractant (mol/L) | [HNO₃] (mol/L) | DPd avec THEMA | DPd avec DMDBTDMA |
|---|---|---|---|
| 0,1 | 3,0 | 9 | 0,3 |
| 0,3 | 2,0 | > 70 | 0,8 |
| 0,3 | 1,0 | 4,5 | 0,1 |

Les malonamides de formule (I) mis en œuvre dans le cadre de la présente invention et notamment le THEMA permettent d'obtenir une efficacité pour l'extraction du palladium améliorée comparée à celle obtenue avec les malonamides de formule (F) tels qu'utilisés dans **[3]** et notamment de DMDBTDMA.

### RÉFÉRENCES BIBLIOGRAPHIQUES

**[1]** Poirot, Bourgeois, Meyer. Palladium extraction by a malonamide derivative (DMDOHEMA) from nitrate media: extraction behavior and third phase characterization. Solv. Extr. Ion Exch., 2014, 32, 529-542.
**[2]** Sypula, Wilden, Schreinemachers, Malmbeck, Geist, Taylor, Modolo. Use of Polyaminocarboxylic Acids as Hydrophilic Masking Agents for Fission Products in Actinide Partitioning Processes. Solv. Extr. Ion Exch., 2012, 30, 748-764.
**[3]** Demande internationale WO 2016/008932 aux noms du CEA et du CNRS publiée le 21 janvier 2016.
**[4]** Pearson. Hard and Soft Acids and Bases. J. Am. Chem. Soc., 1963, 85, 3533-3539.
**[5]** Bao, Sun. Extraction of uranium(VI) with N,N,N',N'-tetrabutylmalonamide and N,N,N',N'-tetrahexylmalonamide. J. Radioanal. Nucl. Ch., 1998, 231, 203-205.
**[6]** Mowafy, Aly. Extraction behaviors of trivalent lanthanides from nitrate medium by selected substituted malonamides. Solvent Extr. Ion Exc., 2006, 24, 677-692.
**[7]** Jung, Park, An, Kim, Tran, Kim. Processing of high purity gold from scraps using diethylene glycol di-N-butyl ether (dibutyl carbitol). Hydrometallurgy, 2009, 95, 262-266.

## Revendications

1. Procédé de séparation du palladium des autres éléments métalliques contenus dans une phase aqueuse nitrique consistant :
- à mettre en contact une phase aqueuse nitrique contenant, en plus du palladium, au moins un autre cation métallique dont la valence est supérieure ou égale à 2 avec une phase organique non miscible à l'eau puis
- à séparer la phase aqueuse nitrique et la phase organique dans laquelle du palladium a été extrait,
ladite phase organique contenant, en tant qu'extractant, au moins un malonamide exempt d'atome de soufre de formule (I) :
R¹(R²)N-C(=O)-CH₂-C(=O)-N(R³)R⁴ (I)
dans laquelle les groupements R¹, R², R³ et R⁴, identiques ou différents, représentent un alkyle, un hétéroalkyle ou un arylalkyle, lesdits alkyle, hétéroalkyle et arylalkyle étant exempt d'atome de soufre et présentant chacun au moins 5 atomes de carbone.

2. Procédé selon la revendication 1, **caractérisé en ce que** ladite phase aqueuse nitrique est issue du traitement des déchets d'équipements électriques et électroniques.

3. Procédé selon la revendication 1 ou 2, **caractérisé en ce que** ladite phase aqueuse nitrique contient, en plus de l'acide nitrique, au moins un autre acide notamment choisi dans le groupe constitué par l'acide chlorhydrique, l'acide bromhydrique, l'acide fluorhydrique et l'acide sulfurique.

4. Procédé selon l'une quelconque des revendications 1 à 3, **caractérisé en ce que** lesdits groupements R¹, R², R³ et R⁴, identiques ou différents, présentent chacun au moins 6 atomes de carbone.

5. Procédé selon l'une quelconque des revendications 1 à 4, **caractérisé en ce que** ledit malonamide exempt d'atome de soufre de formule (I) est choisi dans le groupe constitué par le *N,N,N',N*'-tetrahexylmalonamide, le *N,N,N',N'-*tetraoctylmalonamide, le *N,N,N',N*'-tetra(2-éthylhexyl)malonamide, le N,N'-dihexyl-N,N'-dibenzylmalonamide, le N,N,N',N'-tetra(2-phényléthyl)malonamide et le N,N'-dihexyl-N,N'-dicyclohexylmalonamide.

6. Procédé selon l'une quelconque des revendications 1 à 5, **caractérisé en ce que** ledit malonamide exempt d'atome de soufre de formule (I) est présent dans ladite phase organique en une quantité supérieure ou égale à 10 mM, notamment en une quantité supérieure ou égale à 25 mM, en particulier, en une quantité comprise entre 50 mM et 1,5 M et, plus particulièrement, en une quantité comprise entre 100 mM et 0,5 M.

7. Procédé de récupération sélective du palladium à partir d'une phase aqueuse nitrique qui contient, en plus du palladium, au moins un autre cation métallique dont la valence est supérieure ou égale à 2, ledit procédé comprenant la mise en œuvre d'un procédé de séparation tel que défini à l'une quelconque des revendications 1 à 6.

8. Procédé selon la revendication 7, **caractérisé en ce que** ledit procédé comprend les étapes suivantes :
a) l'extraction du palladium d'une phase aqueuse nitrique qui contient, en plus du palladium, au moins un autre cation métallique dont la valence est supérieure ou égale à 2, laquelle extraction comprend au moins une opération dans laquelle ladite phase aqueuse nitrique est mise en contact avec une phase organique non miscible à elle, contenant, en tant qu'extractant, au moins un malonamide exempt d'atome de soufre de formule (I) telle que précédemment définie, puis séparée de cette phase organique ;
b) éventuellement la désextraction d'au moins un autre cation métallique dont la valence est supérieure ou égale à 2 présent dans la phase organique issue de l'étape (a), laquelle désextraction comprend au moins une opération dans laquelle la phase organique issue de l'étape (b) est mise en contact avec une phase aqueuse, le rapport O/A lors de cette mise en contact étant supérieur ou égal à 4 et
c) la désextraction sélective du palladium présent dans la phase organique issue de l'étape (a) ou éventuellement issue de l'étape (b), laquelle désextraction comprend au moins une opération dans laquelle la phase organique issue de l'étape (a) ou éventuellement issue de l'étape (b) est mise en contact avec une phase aqueuse, puis séparée de cette phase aqueuse.

9. Procédé selon la revendication 8, **caractérisé en ce que** la phase aqueuse mise en œuvre lors de ladite étape (b) est soit de l'eau, soit une solution aqueuse d'acide nitrique.

10. Procédé selon la revendication 8 ou 9, **caractérisé en ce que**, lors de ladite étape (b), ledit rapport O/A est inférieur à 7 et notamment inférieur à 6 et, en particulier, inférieur à 5.

11. Procédé selon la revendication 8 ou 9, **caractérisé en ce que**, lors de ladite étape (b), ledit rapport O/A est supérieur ou égal à 7, notamment supérieur à 7 et inférieur ou égal à 10 et, en particulier, supérieur ou égal à 8 et inférieur ou égal à 10.

12. Procédé selon l'une quelconque des revendications 8 à 11, **caractérisé en ce que** ladite phase aqueuse mise en œuvre lors de ladite étape (c) est une solution diluée d'acide de pH supérieur à 1.

13. Procédé selon l'une quelconque des revendications 8 à 11, **caractérisé en ce que** ladite phase aqueuse mise en œuvre lors de ladite étape (b) contient un agent complexant du palladium notamment choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin ; les composés azotés comme l'ammoniaque, les sels d'hydrazine, les sels d'hydroxylamine et leurs mélanges ; le chlorure d'ammonium ; les composés chélatants dérivés de polyacides carboxyliques comme l'acide oxalique, l'EDTA, l'HEDTA et leurs mélanges.

14. Procédé selon l'une quelconque des revendications 8 à 11, **caractérisé en ce que** ladite phase aqueuse mise en œuvre lors de ladite étape (b) comprend un réducteur du palladium.

## Patentansprüche

1. Verfahren zur Trennung von Palladium von den weiteren metallischen Elementen, die in einer wässrigen Salpetersäurephase enthalten sind, das darin besteht,
- eine wässrige Salpetersäurephase, die neben Palladium mindestens ein weiteres Metallkation mit einer Wertigkeit von größer oder gleich 2 enthält, mit einer mit Wasser nicht mischbaren organischen Phase in Kontakt zu bringen, dann
- die wässrige Salpetersäurephase und die organische Phase, aus der Palladium extrahiert wurde, zu trennen,
wobei die organische Phase als Extraktionsmittel mindestens ein schwefelatomfreies Malonamid der Formel (I) enthält:
R¹(R²)N-C(=O)-CH₂-C(=O)-N(R³)R⁴ (I)
worin die Gruppen R¹, R², R³ und R⁴, die gleich oder verschieden sind, ein Alkyl, ein Heteroalkyl oder ein Arylalkyl darstellen, wobei das Alkyl, das Heteroalkyl und das Arylalkyl schwefelatomfrei sind und jeweils mindestens 5 Kohlenstoffatome aufweisen.

2. Verfahren nach Anspruch 1, **dadurch gekennzeichnet, dass** die wässrige Salpetersäurephase aus der Entsorgung von Elektro- und Elektronikaltgeräten stammt.

3. Verfahren nach Anspruch 1 oder 2, **dadurch gekennzeichnet, dass** die wässrige Salpetersäurephase neben Salpetersäure mindestens eine weitere Säure enthält, die insbesondere ausgewählt ist aus der Gruppe bestehend aus Salzsäure, Bromwasserstoffsäure, Fluorwasserstoffsäure und Schwefelsäure.

4. Verfahren nach einem der Ansprüche 1 bis 3, **dadurch gekennzeichnet, dass** die Gruppen R¹, R², R³ und R⁴, die gleich oder verschieden sind, jeweils mindestens 6 Kohlenstoffatome aufweisen.

5. Verfahren nach einem der Ansprüche 1 bis 4, **dadurch gekennzeichnet, dass** das schwefelatomfreie Malonamid der Formel (I) ausgewählt ist aus der Gruppe bestehend aus *N,N,N',N'*-Tetrahexylmalonamid, *N,N,N',N'-*Tetraoctylmalonamid, *N,N,N',N'*-Tetra(2-ethylhexyl)malonamid, N,N'-Dihexyl-N,N'-Dibenzylmalonamid, N,N,N',N'-Tetra(2-phenylethyl)malonamid und N,N'-Dihexyl-N,N'-Dicyclohexylmalonamid.

6. Verfahren nach einem der Ansprüche 1 bis 5, **dadurch gekennzeichnet, dass** das schwefelatomfreie Malonamid der Formel (I) in der organischen Phase in einer Menge von mehr als oder gleich 10 mM, insbesondere in einer Menge von mehr als oder gleich 25 mM, insbesondere in einer Menge zwischen 50 mM und 1,5 M und insbesondere in einer Menge zwischen 100 mM und 0,5 M vorliegt.

7. Verfahren zur selektiven Gewinnung von Palladium aus einer wässrigen Salpetersäurephase, die neben Palladium mindestens ein weiteres Metallkation mit einer Wertigkeit größer oder gleich 2 enthält, wobei das Verfahren die Durchführung eines Trennverfahrens nach einem der Ansprüche 1 bis 6 umfasst.

8. Verfahren nach Anspruch 7, **dadurch gekennzeichnet, dass** das Verfahren die folgenden Schritte umfasst:
a) Extraktion von Palladium aus einer wässrigen Salpetersäurephase, die neben Palladium mindestens ein weiteres Metallkation mit einer Wertigkeit größer oder gleich 2 enthält, wobei die Extraktion mindestens einen Vorgang umfasst, bei dem die wässrige Salpetersäurephase mit einer damit nicht mischbaren organischen Phase in Kontakt gebracht wird, die als Extraktionsmittel mindestens ein schwefelatomfreies Malonamid der Formel (I), wie zuvor definiert, enthält, und anschließend von dieser organischen Phase getrennt wird;
b) gegebenenfalls Rückextraktion mindestens eines weiteren Metallkations mit einer Wertigkeit größer oder gleich 2, das in der aus Schritt (a) resultierenden organischen Phase vorhanden ist, wobei die Rückextraktion mindestens einen Vorgang umfasst, bei dem die aus Schritt (b) resultierende organische Phase mit einer wässrigen Phase in Kontakt gebracht wird, wobei das O/A-Verhältnis während dieses In-Kontakt-Bringens größer oder gleich 4 ist, und
c) selektive Rückextraktion von in der organischen Phase aus Schritt (a) oder gegebenenfalls aus Schritt (b) vorhandenem Palladium, wobei die Rückextraktion mindestens einen Vorgang umfasst, bei dem die organische Phase aus Schritt (a) oder gegebenenfalls aus Schritt (b) mit einer wässrigen Phase in Kontakt gebracht und dann von dieser wässrigen Phase getrennt wird.

9. Verfahren nach Anspruch 8, **dadurch gekennzeichnet, dass** die in Schritt (b) eingesetzte wässrige Phase entweder Wasser oder eine wässrige Salpetersäurelösung ist.

10. Verfahren nach Anspruch 8 oder 9, **dadurch gekennzeichnet, dass** in Schritt (b) das O/A-Verhältnis kleiner als 7 und insbesondere kleiner als 6 und insbesondere kleiner als 5 ist.

11. Verfahren nach Anspruch 8 oder 9, **dadurch gekennzeichnet, dass** in Schritt (b) das O/A-Verhältnis größer oder gleich 7, insbesondere größer als 7 und kleiner oder gleich 10 und insbesondere größer oder gleich 8 und kleiner oder gleich 10 ist.

12. Verfahren nach einem der Ansprüche 8 bis 11, **dadurch gekennzeichnet, dass** die in Schritt (c) eingesetzte wässrige Phase eine verdünnte Säurelösung mit einem pH-Wert größer als 1 ist.

13. Verfahren nach einem der Ansprüche 8 bis 11, **dadurch gekennzeichnet, dass** die wässrige Phase, die in Schritt (b) eingesetzt wird, einen Palladiumkomplexbildner enthält, der insbesondere ausgewählt ist aus der Gruppe bestehend aus Verbindungen auf Schwefelbasis wie Thioharnstoff, Thiocyanat- oder Thiosulfatsalzen, Natrium- oder Kaliummetabisulfit; Verbindungen auf Chloridbasis wie Salzsäure oder Alkalimetallchloridlösungen; stickstoffhaltigen Verbindungen wie Ammoniak, Hydrazinsalze, Hydroxylaminsalze und deren Gemische; Ammoniumchlorid; von Polycarbonsäuren abgeleiteten chelatbildenden Verbindungen wie Oxalsäure, EDTA, HEDTA und deren Gemische.

14. Verfahren nach einem der Ansprüche 8 bis 11, **dadurch gekennzeichnet, dass** die in Schritt (b) eingesetzte wässrige Phase ein Palladium-Reduktionsmittel enthält.

## Claims

1. Method for separating palladium from the other metal elements contained in a nitric aqueous phase comprising:
- putting into contact a nitric aqueous phase containing, in addition to palladium, at least one other metal cation the valence of which is greater than or equal to 2 with an organic phase immiscible with water then
- separating the nitric aqueous phase and the organic phase wherein the palladium has been extracted,
said organic phase containing, as an extractant, at least one malonamide free of sulphur atoms of formula (I):
R¹(R²)N-C(=O)-CH₂-C(=O)-N(R³)R⁴ (I)
in which the R¹, R², R³ and R⁴ groups, identical or different, represent an alkyl, an heteroalkyl or an arylalkyl, said alkyl, heteroalkyl and arylalkyl being free of sulphur atoms and each having at least 5 carbon atoms.

2. Method according to claim 1, **characterised in that** said nitric aqueous phase stems from the waste treatment of electrical and electronic equipment.

3. Method according to claim 1 or 2, **characterised in that** said nitric aqueous phase contains, in addition to nitric acid, at least one other acid notably selected from the group consisting of hydrochloric acid, bromhydric acid, fluorhydric acid and sulphuric acid.

4. Method according to any one of claims 1 to 3, **characterised in that** said R¹, R², R³ and R⁴ groups, identical or different, each have at least 6 carbon atoms.

5. Method according to any one of claims 1 to 4, **characterised in that** said malonamide free of sulphur atoms of formula (I) is selected from the group consisting of *N,N,N',N*'-tetrahexylmalonamide, *N,N,N',N'*-tetraoctylmalonamide, *N,N,N',N*'-tetra(2-ethylhexyl)malonamide, N,N'-dihexyl-N,N'-dibenzylmalonamide, N,N,N',N'-tetra(2-phenylethyl)malonamide and N,N'-dihexyl-N,N'-dicyclohexylmalonamide.

6. Method according to any one of claims 1 to 5, **characterised in that** said malonamide free of sulphur atoms of formula (I) is present in said organic phase in an quantity greater than or equal to 10 mM, notably in a quantity greater than or equal to 25 mM, in particular, in a quantity comprised between 50 mM and 1.5 M and, more particularly, in a quantity comprised between 100 mM and 0.5 M.

7. Method for the selective recovering of palladium from a nitric aqueous phase that contains, in addition to palladium, at least one other metal cation the valence of which is greater than or equal to 2, said method comprising the implementing of a method for separating such as defined in any one of claims 1 to 6.

8. Method according to claim 7, **characterised in that** said method comprises the following steps:
a) extracting palladium from a nitric aqueous phase that contains, in addition to palladium, at least one other metal cation the valence of which is greater than or equal to 2, which extracting comprises at least one operation in which said nitric aqueous phase is put into contact with an organic phase that is immiscible with it, containing, as an extractant, at least one malonamide free of sulphur atoms of formula (I) such as defined hereinabove, then separated from this organic phase;
b) optionally back-extracting at least one other metal cation of which the valency is greater than or equal to 2 present in the organic phase stemming from step (a), which back-extracting comprises at least one operation in which the organic phase stemming from step (b) is put into contact with an aqueous phase, the O/A ratio during this putting into contact being greater than or equal to 4 and
c) selectively back-extracting the palladium present in the organic phase stemming from step (a) or optionally stemming from step (b), which back-extracting comprises at least one operation in which the organic phase stemming from step (a) or optionally stemming from step (b) is put into contact with an aqueous phase, then separated from this aqueous phase.

9. Method according to claim 8, **characterised in that** the aqueous phase implemented during said step (b) is either water, or an aqueous solution of nitric acid.

10. Method according to claim 8 or 9, **characterised in that**, during said step (b), said O/A ratio is less than 7 and notably less than 6 and, in particular, less than 5.

11. Method according to claim 8 or 9, **characterised in that**, during said step (b), said O/A ratio is greater than or equal to 7, notably greater than 7 and less than or equal to 10 and, in particular, greater than or equal to 8 and less than or equal to 10.

12. Method according to any one of claims 8 to 11, **characterised in that** said aqueous phase implemented during said step (c) is a diluted solution of acid with a pH greater than 1.

13. Method according to any one of claims 8 to 11, **characterised in that** said aqueous phase implemented during said step (b) contains a complexing agent of the palladium notably selected from the group consisting of sulphur based compounds such as thiourea, thiocyanate or thiosulphate salts, sodium or potassium metabisulphite; choride based compounds such as hydrochloric acid or solutions of alkali metal chlorides; nitrogen compounds such as ammonia, hydrazine salts, hydroxylamine salts and mixtures thereof; ammonium chloride; chelating compounds derived from carboxylic polyacids such as oxalic acid, EDTA, HEDTA and mixtures thereof.

14. Method according to any one of claims 8 to 11, **characterised in that** said aqueous phase implemented during said step (b) comprises a palladium reducer.
